# EUROPEAN PATENT APPLICATION

(11) **EP 2 557 879 A1**
(43) Date of publication of application: **13.02.2013**
(21) Application number: 11765600.9
(22) Date of filing: 30.03.2011
(51) Int. Cl.: H04W 72/12, H04W 28/06, H04W 72/04

(54) **WIRELESS COMMUNICATION CONTROL DEVICE AND WIRELESS COMMUNICATION CONTROL METHOD**

(30) Priority: 05.04.2010 JP 2010087381
(71) Applicant: NTT DOCOMO, INC., Chiyoda-ku Tokyo 100-6150 (JP)
(72) Inventor: YASUKAWA, Shimpei, Tokyo 100-6150 (JP); KAWAMURA, Teruo, Tokyo 100-6150 (JP); TAKEDA, Kazuaki, Tokyo 100-6150 (JP); MIKI, Nobuhiko, Tokyo 100-6150 (JP)
(74) Representative: HOFFMANN EITLE
(86) International application number: PCT/JP2011/057952
(87) International publication number: WO 2011/125700

(57) **Abstract**

The present invention aims to realize an uplink assignment information structure that is optimal for signaling of uplink assignment information when a plurality of frequency bands are assigned to an uplink data channel. In a radio communication system where a plurality of frequency bands are assigned to one user on the uplink, uplink assignment information including uplink resource allocation information in which resources are allocated in a bitmap format is defined, this uplink assignment information is formed in the same bit size as downlink assignment information (for example, DCI format 1), in which downlink resource allocation information in which resources are allocated on a bitmap basis is included, and the interpretation of part of the bits of the downlink assignment information (DCI format 1) is changed, so that it is possible to identify the uplink assignment information of the same bit size.

## Description

### TECHNICAL FIELD

The present invention relates to a radio communication control apparatus and a radio communication control method for signaling radio resources allocated to an uplink data channel in a bitmap format.

### Background Art

The communication scheme to be a successor of W-CDMA (Wideband Code Division Multiple Access) and HSDPA (High Speed Downlink Packet Access), that is, long-term evolution (LTE), has been set forth by 3GPP, which is the standards organization of W-CDMA, and, for radio access schemes, OFDMA (Orthogonal Frequency Division Multiple Access) has been employed on the downlink and SC-FDMA (Single-Carrier Frequency Division Multiple Access) has been employed on the uplink. Presently, 3GPP is studying the successor system of LTE (referred to as "LTE-Advanced" including Release 10 and including versions after Release 10). LTE-Advanced hereinafter will be abbreviated as "LTE-A."

The LTE system is a system to perform communication by sharing one, two, or a greater number of physical channels by a plurality of mobile stations UEs, on both the uplink and the downlink. A channel that is shared by a plurality of mobile stations UEs is generally referred to as a shared channel (or also referred to as "data channel"), and, in LTE, is the PUSCH (Physical Uplink Shared Channel) on the uplink or the PDSCH (Physical Downlink Shared Channel) on the downlink.

In a communication system using shared channels such as the LTE system, to which mobile stations UEs the above shared channels are allocated needs to be signaled per transmission time interval (TTI) (or per subframe in LTE).

The PDCCH (Physical Downlink Control Channel) is defined as the downlink control channel to be used for the above signaling. Downlink control information to be transmitted in the PDCCH includes downlink scheduling information, UL scheduling grant, overload indicator, transmission power control command bit, and so on. Also, the downlink scheduling information includes, for example, assignment information of resource blocks, which are radio resources for downlink radio access, mobile station UE IDs, the number of streams, information related to precoding vectors, data size, modulation scheme, and information related to HARQ (Hybrid Automatic Repeat reQuest). Also, the uplink scheduling grant includes, for example, assignment information of resource blocks, which are radio resources for uplink radio access, mobile station UE IDs, data size, modulation scheme, uplink transmission power information, and information about the demodulation reference signal.

LTE allows assigning resource blocks in a discontinuous manner in the system band in order to achieve a frequency scheduling effect on the downlink where OFDMA is applied as the radio access scheme. Consequently, a bitmap format is employed to report each resource block that is assigned in a discontinuous manner, to the mobile station UE. On the other hand, on the uplink where SC-FDMA is applied as the radio access scheme, resource blocks are allowed only to be assigned in a continuous manner in the system band, to realize a single carrier (which refers to transmission using a plurality of consecutive subcarriers). Consequently, a format to report a set of the starting resource block of a single carrier and the resource block length is employed, in order to reduce the signaling overhead.

### CITATION LIST

### NON-PATENT LITERATURE

Non-Patent Literature 1: 3GPP TR36.211 (V0.2.1), "Physical Channels and Modulation," November 2006

### SUMMARY OF INVENTION

### TECHNICAL PROBLEM

Now, in Release 10, which is presently under study by 3GPP, there is an agreement to employ clustered DFT-spread OFDM for the uplink radio access scheme. In clustered DFT-spread OFDM, a plurality of clusters are assigned to one mobile station UE.

However, if, similar to the case of single carrier, a signaling method to report the starting resource block and the resource block length is employed with respect to each of a plurality of clusters, there is a problem that the DCI format (DCI format 0) defined for reporting uplink assignment information in LTE has insufficient number of bits.

The present invention has been made in view of the above backgrounds, and it is therefore an object of the present invention to provide a radio communication control apparatus and a radio communication control method that realize an uplink assignment information structure that is optimal for signaling of uplink assignment information when a plurality of frequency bands are assigned to an uplink data channel.

### SOLUTION TO PROBLEM

A radio communication control apparatus according to the present invention includes a downlink control information generation section configured to generate downlink assignment information including control information for demodulation of a downlink data channel, an uplink control information generation section configured to generate uplink assignment information including control information for demodulation of an uplink data channel, a control channel multiplexing section configured to multiplex the uplink assignment information and the downlink assignment information over a control channel, and a transmission section configured to transmit by radio the uplink assignment information and the downlink assignment information multiplexed over the control channel, and, in this radio communication control apparatus, the downlink control information generation section is configured to arrange resource allocation information related to a radio resource allocated to the downlink data channel, in the downlink assignment information, in a bitmap format, assign the resource allocation information, in the bitmap format, to a resource block arrangement pattern, in which a resource block group grouping a plurality of resource blocks, each of which is a minimum unit of resource allocation, is defined, and which is configured by puncturing a predetermined number of resource block groups, from a whole system band, in a predetermined pattern, and arrange arrangement pattern identification bits that identify a resource block arrangement pattern used to assign the resource allocation information, in a predetermined position in the downlink assignment information, and the uplink control information generation section is configured to form the uplink assignment information in the same bit size as the downlink assignment information, arrange resource allocation information related to a plurality of frequency bands assigned to the uplink data channel, in the uplink assignment information, in the bitmap format, and include in the uplink assignment information, one of the arrangement pattern identification bits that specify the resource block arrangement pattern, as an identification bit to represent the uplink assignment information.

According to this configuration, one of arrangement pattern identification bits to be used to specify the resource block arrangement pattern in demodulation of downlink assignment information is used as an identification bit to represent uplink assignment information, so that it is possible to identify uplink assignment information even when downlink assignment information and uplink assignment information are formed in the same bit size.

### TECHNICAL ADVANTAGES OF INVENTION

According to the present invention, it is possible to realize an uplink assignment information structure that is optimal for signaling of uplink assignment information when a plurality of frequency bands are assigned to an uplink data channel.

### BRIEF DESCRIPTION OF DRAWINGS

FIG. 1 is a conceptual diagram illustrating a case where clustered DFT-spread OFDM and SC-FDMA are applied to different component carriers on the uplink;
FIG. 2 provides diagrams showing RB arrangement patterns related to downlink resource allocation information, allocated in a bitmap format;
In FIG. 3, FIG. 3A is a bit configuration diagram of DCI format 1A, FIG. 3B is a configuration diagram of DCI format 0A according to the first invention, and FIG. 3C is a configuration diagram of DCI format 0A according to a second invention;
FIG. 4 is a diagram showing bitmap patterns that are optimal for signaling when the system band is smaller than 10 MHz;
FIG. 5 provides diagrams showing RB arrangement patterns that are optimal for signaling when the system band is greater than 10 MHz;
FIG. 6 provides diagrams to compare existing downlink assignment information (DCI format 1), and DCI format 1' and DCI format 0A' to which one identification bit is added;
FIG. 7 is a configuration diagram of a mobile communication system according to the present embodiment;
FIG. 8 is an overall configuration diagram of a base station apparatus according to the present embodiment;
FIG. 9 is an overall configuration diagram of a mobile terminal apparatus according to the present embodiment;
FIG. 10 is a functional block diagram of a baseband signal processing section provided in a base station apparatus according to the present embodiment, and part of the higher layers;
FIG. 11 is a functional block diagram of a baseband signal processing section provided in a mobile terminal apparatus according to the present embodiment; and
FIG. 12 is a configuration diagram of a mobile terminal apparatus that allows an uplink radio access scheme to be switched between clustered DFT-spread OFDM and OFDM.

### DESCRIPTION OF EMBODIMENTS

According to one aspect of the present invention (the first invention), in a radio communication system where a plurality of frequency bands are assigned to an uplink data channel on a per user basis (for example, when clustered DFT-spread OFDM, which is agreed on in Release 10, is applied), uplink assignment information, in which resource allocation information to command resource allocation in a bitmap format, is defined, this uplink assignment information is formed in the same bit size as downlink assignment information (for example, DCI format 1), in which resource allocation information to command resource allocation in a bitmap format is arranged, and the interpretation of part of the bits of the downlink assignment information (DCI format 1) is changed, to allow the uplink assignment information of the same bit size to be identified. In the following descriptions, in order to differentiate from existing uplink assignment information (for example, DCI format 0) that is defined in LTE, the new DCI format for uplink assignment information which the present invention proposes will be referred to as "DCI format 0A (or 0A')."

By this means, DCI format 1 and DCI format 0A are made distinguishable by changing the interpretation of the bits of existing downlink assignment information (DCI format 1), so that it is possible to signal uplink resource allocation information to which clustered DFT-spread OFDM is applied, in a bitmap format, and it is possible, in the mobile station UE, to demodulate uplink assignment information (DCI format 0A) and downlink assignment information (DCI format 1) in one blind decoding.

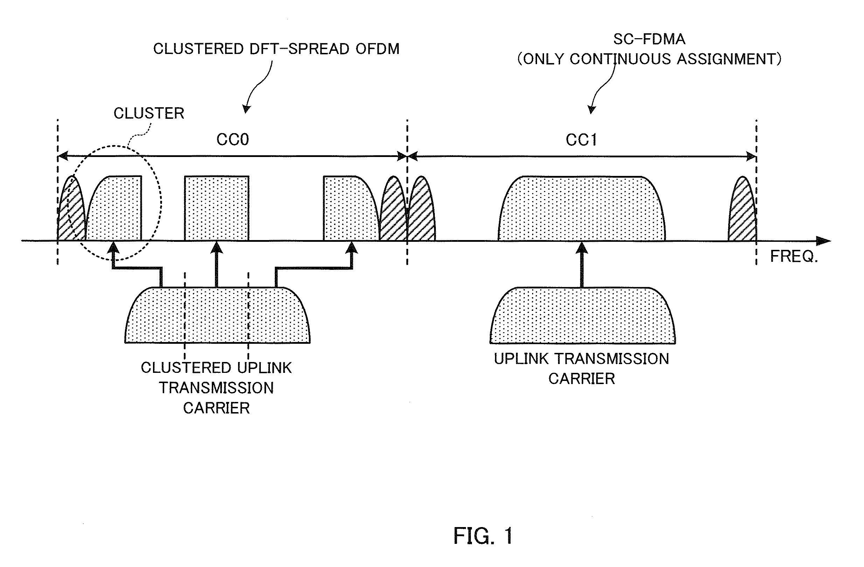

FIG. 1 is a conceptual diagram illustrating a case where clustered DFT-spread OFDM is applied to uplink radio access of one component carrier and SC-FDMA is applied to uplink radio access of the other component carrier.

In the event SC-FDMA is applied to uplink radio access, the PUCCH (Physical Uplink Control Channel) is transmitted using both ends of component carrier CC1, a single carrier is assigned to a predetermined band in the center part of component carrier CC1, and the PUSCH is transmitted using that single carrier.

In the event clustered DFT-spread OFDM is applied to uplink radio access, although, similar to uplink SC-FDMA, the PUCCH is transmitted using both ends of component carrier CC0, in clustered DFT-spread OFDM, a single carrier is divided into a plurality of (for example, three) clusters, and the PUSCH is transmitted by a plurality of clusters in parallel. Resource allocation information of the plurality of clusters is signaled using the PDCCH.

In LTE, DCI format 1 is defined as downlink resource allocation information, and DCI format 0 is defined as uplink resource allocation information. The present inventor has contemplated how the interpretation of part of the bits of DCI format 1 should be changed to make it possible to prevent increase of the number of times to perform blind decoding upon demodulating DCI format 0A, and, as a result, found out that it is effective to identify new DCI format 0A in the same number of bits as downlink assignment information (DCI format 1) by changing the interpretation of part of the bits of the downlink assignment information (DCI format 1).

In LTE, the minimum amount of resources that can be allocated on the downlink or the uplink is referred to as resource block (RB). One RB is 180 kHz wide and formed with twelve subcarriers. For example, a 20-MHz system band is formed with 100 RBs, and, if resource allocation information is signaled simply in a bitmap format, the signaling requires 100 bits. In LTE, a scheme to group RBs (referred to as "RB group") and report resource allocation in RBG (Resource Block Group) units is employed in order to reduce the number of bits.

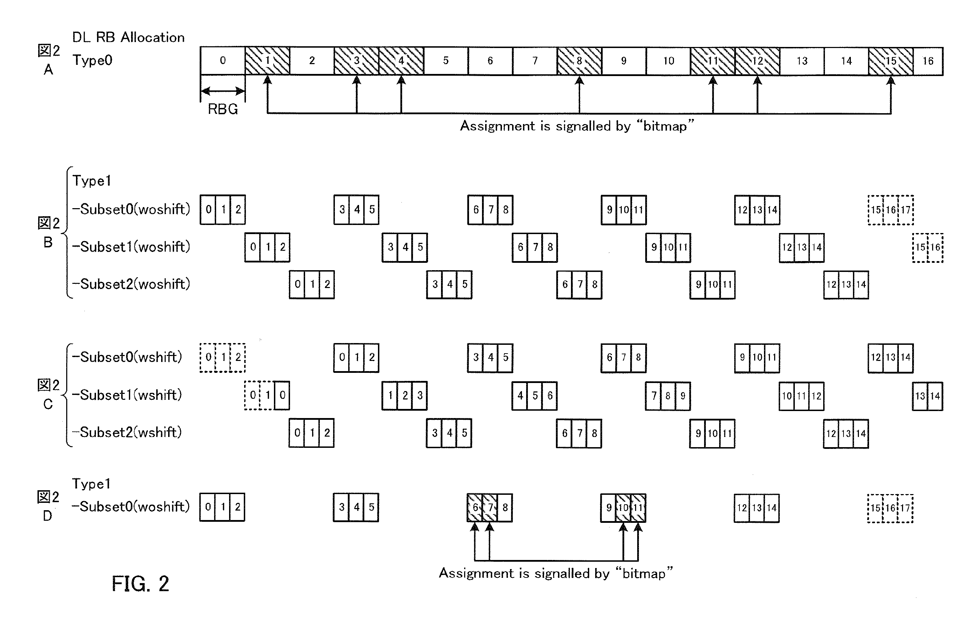

FIG. 2 shows RB arrangement patterns related to downlink resource allocation information allocated in a bitmap format. In LTE, type 0 and type 1 are defined as downlink RB arrangement patterns.

FIG. 2A shows the RB arrangement pattern of type 0. Type 0 separates the whole system band in RBG units, and uses the RBG unit as the minimum unit of RB assignment. This drawing shows an example where 1 RBG is formed with 3 RBs and the whole system band is formed with the zeroth to sixteenth RBGs. Resources are allocated to the first, third, fourth, eighth, eleventh, twelfth and fifteenth RBGs. In this way, type 0 can report resource allocation in RBG units but cannot report resource allocation in RB units.

FIG. 2B and 2C show RB arrangement patterns of type 1. Although type 1 designates resource allocation in RB units, one RB arrangement pattern covers only part of the system band, and it takes a plurality of RB arrangement patterns having different coverages to cover the whole of the system band. Each individual RB arrangement pattern is specified by a subset number.

Also, since bits to identify type 0/1, subset number and left-alignment/right-alignment are required, RBGs that can be allocated run short. For the number of bits to run short, the RB arrangement patterns are aligned to the left (aligned from the side where the RBG index is smaller) or aligned to the right (aligned from the side where the RBG index is bigger), and resources are allocated.

To be more specific, subset 0 shown in this drawing can designate the resources corresponding to the zeroth, third, sixth, ninth, twelfth and fifteenth RBGs, in RB units. Subset 1 can designate the resources corresponding to the (first, fourth, seventh, tenth, thirteenth and sixteenth) RBG indices, which are all one RBG shifted from the resource pattern of subset 0, in RB units. Subset 2 can designate the resources corresponding to the (second, fifth, eighth, eleventh and fourteenth) RBG indices that are one RBG more shifted, in RB units. For type 1, "withoutshift" (FIG. 2B), which is a pattern to assign resource blocks to be aligned to the left, and "withshift" (FIG. 2C), which is a pattern to assign resource blocks to be aligned to the right, are prepared. Consequently, type 1 is specified by the combination of the subset number and the left-alignment (woshift) or right-alignment (wshift).

FIG. 2D is a specific example of an RB arrangement pattern of type 1. A pattern of subset 0 and left-alignment (woshift) is shown. In this RB arrangement pattern, RBs 6, 7, 10 and 11 are assigned.

With the present invention, one of the six RB arrangement patterns shown in FIG. 2B is used as a flag to differentiate between DCI format 1 and DCI format 0A. For example, the RB arrangement pattern of type 1, subset 2 and left-alignment (Type 1, Subset 2 (woshift)) can be used as a flag to represent DCI format 0A. As shown in FIG. 2B, the RB arrangement pattern designated by type 1 and subset 2 (woshift) overlaps the RB arrangement pattern designated by type 1 and subset 2 (wshift), so that, if either one RB arrangement pattern can be signaled, then it is possible to signal all the resource blocks.

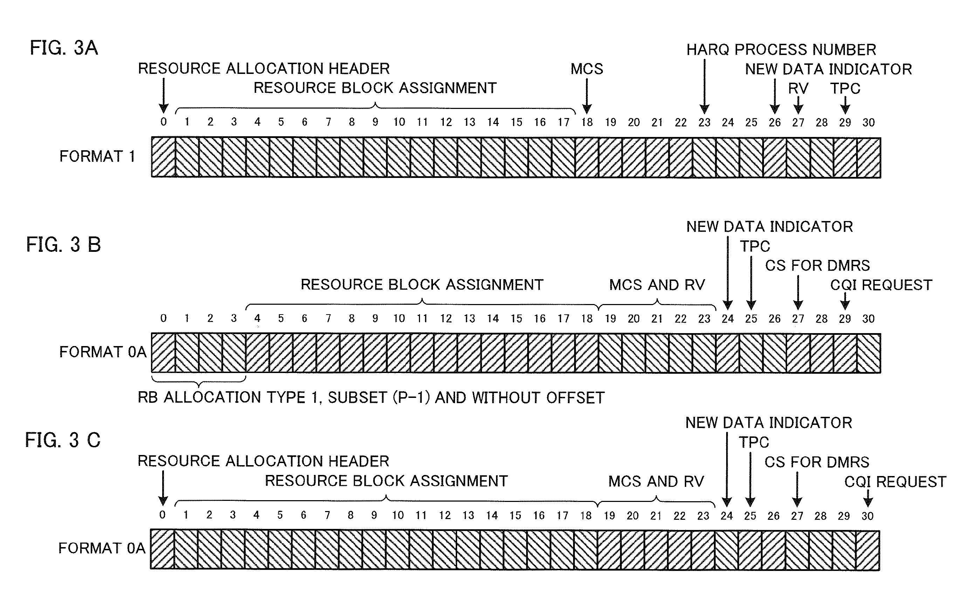

FIGs. 3A and 3B illustrate DCI format 1, which is the downlink DCI format (downlink assignment information) defined by LTE, and DCI format 0A, which is a new uplink DCI format (uplink assignment information) related to the present invention, in comparison.

FIG. 3A shows the configuration of DCI format 1, and, in particular, shows the bit configuration of DCI format 1A, which is a DCI format for downlink compact assignment. DCI format 1 is formed with a header (the zeroth bit) to represent type 0/type 1, RB assignment information (the first to seventeenth bits) to represent the RB position assigned to the user, MCS (Modulation and Coding Scheme) information (the eighteenth to twenty-second bits) of the assigned RBs, the HARQ process number (the twenty-third to twenty-fifth bits), which is information required when using hybrid ARQ, an identifier (new data indicator) (the twenty-sixth bit) to identify between new data and retransmission data, information (redundancy version) (the twenty-seventh and twenty-eighth bits) to represent which part of a coded sequence is sent, and a PUCCH transmission power control command (TPC) (the twenty-ninth and thirtieth bits).

FIG. 3B shows a configuration of new DCI format 0A related to the present invention. DCI format 0A is formed in the same bit size as DCI format 1 shown in FIG. 3A. The top four bits (from the zeroth to third bit) of DCI format 0A are used as a flag to represent DCI format 0A. To be more specific, the header is formed with four bits, including a header (the zeroth bit) to represent type 0/type 1, a subset number (the first and second bits), and designation (the third bit) of left-alignment (woshift) and right-alignment (wshift). The top four-bit header (identifier) is a flag to differentiate between DCI format 1 and DCI format 0A, and, if this header is type 1 and subset 2 (woshift), DCI format 0A is represented. The number of RBs to constitute one RBG varies, and therefore the flag to differentiate between DCI format 1 and DCI format 0A may be defined as type 1 and subset (P-1) (woshift). P is the number of RBs to constitute one RBG.

After the header, new DCI format 0A is formed with RB assignment information (the fourth to eighteenth bits) to represent the RB positions assigned to the user, MCS information and redundancy version (RV) (the nineteenth to twenty-third bits) of the assigned RBs, an identifier (new data indicator) (the twenty-fourth bit) to differentiate between new data and retransmission data, a PUSCH transmission power control command (TPC) (the twenty-fifth and twenty-sixth bits), the cyclic shift for the demodulation reference signal (CS for DMRS) (the twenty-seventh to twenty-ninth bits), and a CQI request (the thirtieth bit).

Although the mobile station UE searches for DCI format 1 or DCI format 0A for the mobile station UE by performing blind decoding of the search space in the PDCCH, if the top four bits of a DCI format of the same size as DCI format 1 are used as an identification flag for DCI format 0A, and type 1 and subset (P-1) (woshift) are set, the mobile station UE identifies the bits as uplink assignment information DCI format 0A and switches the interpretation of the DCI format to an interpretation based on the bit configuration shown in FIG. 3B.

Note that, when the number of uplink clusters increase, the size of RB assignment information to be signaled increases in proportion to this. To maintain the same size as the downlink assignment information (DCI format 1) and increase the bit allocation field of RB assignment information, for example, a method of sizing up the RBG (for example, constituting one RBG by not three RBs but four RBs), a method of using part (several bits) of the PUCCHs arranged at both ends of the system band (20 MHz), and so on are applicable.

According to another aspect of the present invention (second invention), uplink assignment information (DCI format 0A), in which resource allocation information in a bitmap format is arranged, is formed in the same number of bits as existing uplink assignment information (DCI format 0) defined in LTE. That is to say, a plurality of punctured bitmap patterns that are punctured in RBG units are prepared so that uplink assignment information (DCI format 0A), in which resources are allocated in a bitmap format, is formed with the same number of bits as existing uplink assignment information (DCI format 0), and one of the punctured bitmap patterns is applied to the resource allocation information on DCI format 0A.

By this means, uplink resource allocation, to which clustered DFT-spread OFDM is applied, can be represented based on bitmap, and uplink resource allocation information is formed with the same number of bits as existing uplink assignment information (DCI format 0), so that it is not necessary to change the interpretation of part of DCI format 1 like the first invention, and it is possible to prevent the number of blind decoding from increasing.

Note that, if the system band is smaller than 10 MHz, it is possible to support uplink resource allocation information, to which clustered DFT-spread OFDM is applied, only by making the resource allocation information RBGs as in the case of downlink RB allocation type 0. It is not necessary to use a plurality of RB arrangement patterns to cover the system band.

FIG. 3C is a configuration example of a DCI format (DCI format 0A) that is optimal for signaling of uplink assignment information according to the second invention. As shown in this drawing, the top bit is a resource allocation header to represent DCI format 1/DCI format 0 (or DCI format 0A). The hopping flag that is included in uplink assignment information (DCI format 0) to which SC-FDMA is applied, and the zero padding that is added to the tail for size adjustment are not necessary and therefore omitted, and the omitted bits are used for the resource allocation information. In the uplink assignment information (DCI format 0) shown in FIG. 3C, eighteen bits are ensured for resource allocation information.

When the system band is smaller than 10 MHz, it is preferable to make the system band RBGs and designate resource allocation information, in RBG units, in the same way as with existing uplink assignment information (DCI format 0), and, when the system band is greater than 10 MHz, it is preferable to apply one of the punctured bitmap patterns to the resource allocation information.

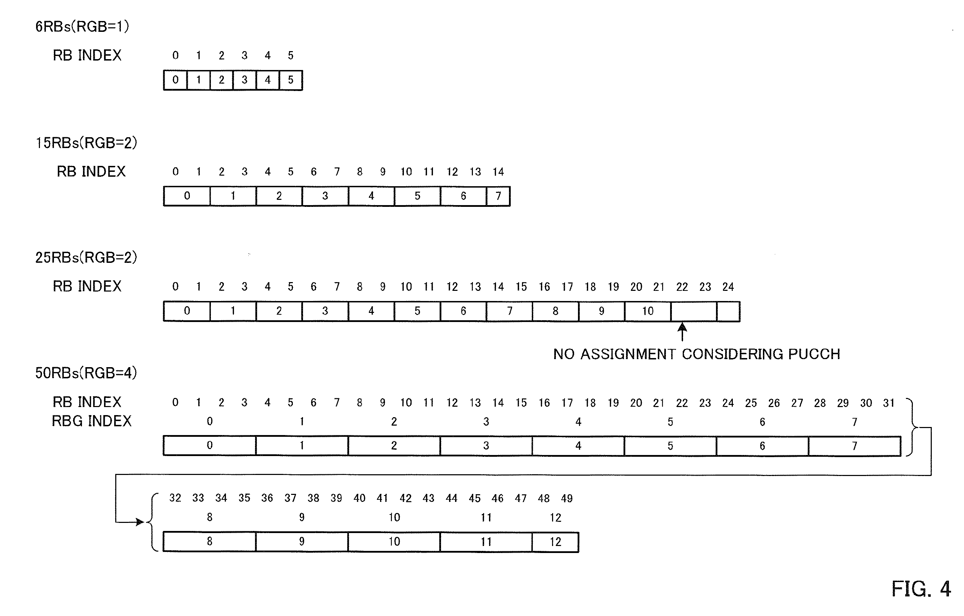

FIG. 4 shows examples of bitmap patterns that are optimal for signaling when the system band is smaller than 10 MHz. When the system band to be used for uplink transmission is smaller than 10 MHz, the size of the resource allocation information is small, so that it is possible to use an RB arrangement pattern of type 0, which has been described above. When the system band is 1.2 MHz, the whole system band is formed with six RBs, so that it is possible to signal the resource allocation information using six bits. When the system band is 3 MHz, the whole system band is formed with fifteen RBs, so that it is possible to signal the resource allocation information using eight bits, by grouping one RBG with two RBs. When the system band is 5 MHz, the whole system band is formed with twenty five RBs, so that it is possible to signal the resource allocation information using eleven bits, by grouping one RBG with two RBs. Furthermore, when the system band is 10 MHz, the whole system band is formed with fifty RBs, so that it is possible to signal the resource allocation information using thirteen bits, by grouping one RBG with four RBs.

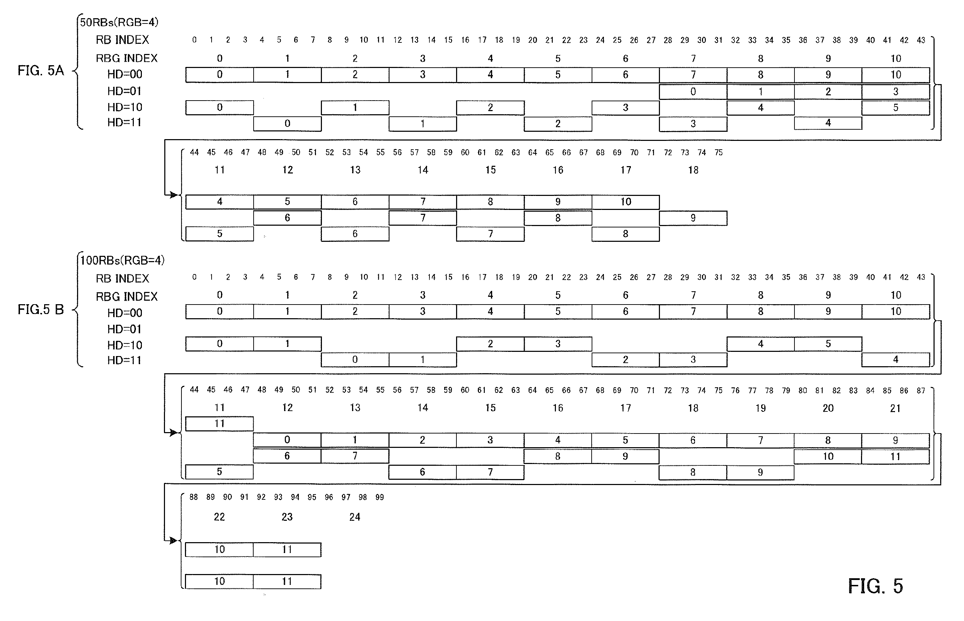

FIGs. 5A and 5B show examples of RB arrangement patterns that are optimal for signaling when the system band is greater than 10 MHz. 15 MHz and 20 MHz are assumed as system bands greater than 10 MHz.

If the system band is 15 MHz, the whole system band is formed with seventy five RBs, so that, even if one RBG is grouped with four RBs, nineteen bits are still required. If nineteen bits of resource allocation information is inserted in the uplink assignment information (DCI format 0A), this is bigger than the bit size (eighteen bits) that is ensured for resource allocation information in uplink assignment information (DCI format 0A) that is formed as shown in FIG. 3C. So, by allowing resources for half of the whole system band to be allocated in one RB arrangement pattern, the number of bits to be required for resource allocation is reduced.

Four specific RB arrangement patterns are shown in FIG. 5A. The first RB arrangement pattern (HD=00) covers RBG index 0 to RBG index 10, which corresponds to about the first half portion of the system band (15 MHz), and the second RB arrangement pattern (HD=01) covers RBG index 7 to RBG index 17, which corresponds to about the latter half of the system band (15 MHz). By this means, it is possible to reduce the number of bits of one RB arrangement pattern down to eleven bits.

Also, the third RB arrangement pattern (HD=10) forms an RB arrangement pattern, in which the RBGs are punctured over the whole system band at one-RBG intervals, and the fourth arrangement pattern (HD=11) forms an RB arrangement pattern, in which the third RB arrangement pattern (HD=10) is shifted by one RBG and the RBGs are punctured over the whole system band at one-RBG intervals. The third and fourth RB arrangement patterns can reduce the bit size down to nine bits/eight bits.

If the system band is 20 MHz, the whole system band is formed with 100 RBs, so that, even if one RBG is grouped with four RBs, twenty five bits are still required. So, RB arrangement patterns are formed following the same manner as in the case of 15 MHz.

Four specific RB arrangement patterns are shown in FIG. 5B. The first RB arrangement pattern (HD=00) covers RBG index 0 to RBG index 11, which corresponds to about the first half portion of the system band (20 MHz), and the second RB arrangement pattern (HD=01) covers RBG index 12 to RBG index 23, which corresponds to about the latter half of the system band (20 MHz). By this means, it is possible to reduce the number of bits of one RB arrangement pattern down to twelve bits.

Also, the third RB arrangement pattern (HD=10) forms an RB arrangement pattern, in which two RBGs are punctured from the end of the system band every two RBGs, and the fourth arrangement pattern (HD=11) forms an RB arrangement pattern, in which the third RB arrangement pattern (HD=10) is shifted by two RBGs and two RBGs are punctured from the end of the system band every two RBGs. The third and fourth RB arrangement patterns can reduce the bit size down to twelve bits.

As described above, when the first to fourth RB arrangement patterns are prepared, identification information of the RB arrangement patterns can be reported in two bits of HD (=00, 01, 10 and 11). Consequently, to make the first to fourth RB arrangement patterns applicable to the resource allocation information of uplink assignment information (DCI format 0A), in addition to the maximum number of bits in the first to fourth RB arrangement patterns, only two bits for the identification information (HD) of the RB arrangement patterns are required to be ensured in DCI format 0A. If eighteen bits are ensured for resource allocation information in uplink assignment information (DCI format 0A) that is formed as shown in FIG. 3C, this can be supported sufficiently if the maximum number of bits of the RB arrangement patterns is twelve bits as described above.

The uplink assignment information (DCI format 0A) can be formed in the same bit size as existing uplink assignment information (DCI format 0), so that it is no longer necessary to change the interpretation of part of the bits of downlink assignment information, and therefore the process can be simplified.

According to another aspect of the present invention (the third invention), downlink assignment information (for example, DCI format 1), which includes downlink resource allocation information that is based on bitmap, and new uplink assignment information are formed in the same bit size, and one identification bit is added to both DCI format 1 and DCI format 0A, so as to differentiate between downlink assignment information (DCI format 1) and new uplink assignment information (DCI format 0A). In the following descriptions, the downlink assignment information (DCI format 1) with an additional one bit will be referred to as "DCI format 1'" and the new uplink assignment information with an additional one bit will be referred to as "DCI format 0A'."

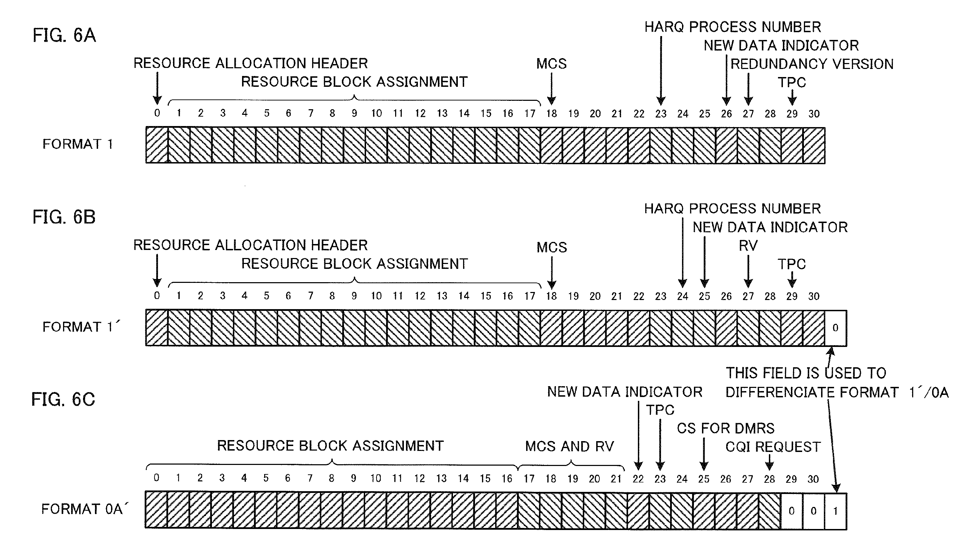

FIG. 6 shows existing downlink assignment information (DCI format 1), and DCI format 1' and DCI format 0A', in which one identification bit is newly added, in comparison.

FIG. 6A shows a bit configuration of DCI format 1A, which is DCI format for downlink compact assignment defined in LTE, and is the same as the DCI format shown in FIG. 3A.

FIG. 6B shows DCI format 1'. As shown in this drawing, an identification bit for distinction from DCI format 0A' is added to DCI format 1'. For example, assume that identification bit=0 represents DCI format 1' and identification bit=1 represents DCI format 0A'.

FIG. 6C shows DCI format 0A'.In DCI format 0A', three bits are added after the CQI request, and two bits of these are padding bits for making the number of bits match with DCI format 1, and the rest of one bit is an identification bit. The top seventeen bits of DCI format 0A' are the resource allocation field, and resource allocation is commanded in a bitmap format in the resource allocation field. The mobile station UE, upon performing blind decoding of the PDCCH and detecting shared data channel control information for the mobile station UE, identifies DCI format 1' or DCI format 0A' from the identification bit at the tail.

In this way, new DCI format 0A' can be realized easily, although it becomes one bit bigger than DCI format 1A, which is the DCI format for downlink compact assignment defined in LTE.

Now, an embodiment of the present invention will be described below in detail with reference to the accompanying drawings. A case of using base stations and mobile stations to support the LTE-A system will be described here.

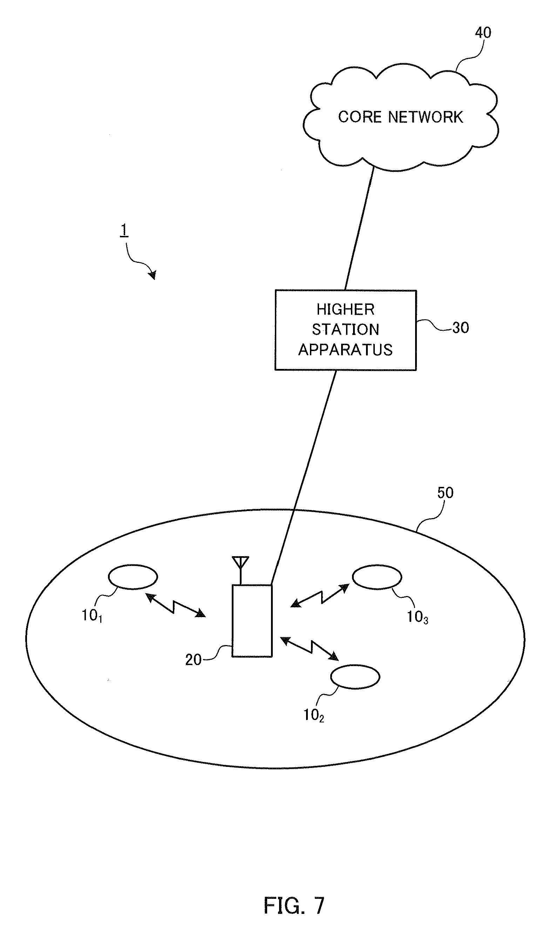

Referring to FIG. 7, a mobile communication system 1 having a mobile station (UE) 10 and a base station (Node B) 20 according to an embodiment of the present invention will be described. FIG. 7 is a diagram for explaining the configuration of the mobile communication system 1 having mobile stations 10 and a base station 20 according to the present embodiment. Note that the mobile communication system 1 illustrated in FIG. 7 is a system to accommodate, for example, the LTE system or SUPER 3G. Also, this mobile communication system 1 may be referred to as IMT-Advanced or may be referred to as 4G.

As illustrated in FIG. 7, the mobile communication system 1 is configured to include a base station apparatus 20 and a plurality of mobile terminal apparatuses 10 (10₁, 10₂, 10₃, · · · 10ₙ, where n is an integer to satisfy n>0) that communicate with this base station apparatus 20. The base station apparatus 20 is connected with a higher station apparatus 30, and this higher station apparatus 30 is connected with a core network 40. The mobile terminal apparatuses 10 are able to communicate with the base station apparatus 20 in a cell 50. Note that the higher station apparatus 30 includes, for example, an access gateway apparatus, a radio network controller (RNC), a mobility management entity (MME) and so on, but is by no means limited to these. The higher station apparatus 30 may be included in the core network 40.

The mobile terminal apparatuses (10₁, 10₂, 10₃, · · · 10ₙ) include LTE terminals and LTE-A terminals, but the following descriptions will be given with respect to "mobile terminal apparatus 10," unless specified otherwise. Also, although the mobile terminal apparatus 10 performs radio communication with the base station apparatus 20 for ease of explanation, more generally, user apparatuses (UE: User Equipment) including mobile terminal apparatuses and fixed terminal apparatuses may be used as well.

In the mobile communication system 1, as radio access schemes, OFDMA (Orthogonal Frequency Division Multiple Access) is applied to the downlink, and SC-FDMA (Single-Carrier Frequency-Division Multiple Access) and clustered DFT-spread OFDM are applied to the uplink. OFDMA is a multi-carrier transmission scheme to perform communication by dividing a frequency band into a plurality of narrow frequency bands (subcarriers) and mapping data to each subcarrier. SC-FDMA is a single carrier transmission scheme to reduce interference between terminals by dividing, per terminal, a system band into bands formed with one or continuous resource blocks, and allowing a plurality of terminals to use mutually different bands. Clustered DFT-spread OFDM is a scheme to realize uplink multiple access by allocating groups (clusters) of discontinuous, clustered subcarriers to one mobile station UE and applying discrete Fourier transform spread OFDM to each cluster.

Here, the communication channels in the LTE and LTE-A systems will be described. The downlink communication channels include the PDSCH, which is used by each mobile terminal apparatus 10 on a shared basis, and downlink L1/L2 control channels (including the PDCCH, PCFICH and PHICH). This PDSCH transmits user data and higher control signals. The higher control signals include RRC signaling to report the increase/decrease of the number of carrier aggregations, the uplink radio access scheme (SC-FDMA/clustered DFT-spread OFDM) to be applied to each component carrier, and so on, to the mobile terminal apparatus 10.

The uplink communication channels include the PUSCH, which is used by each mobile terminal apparatus 10 on a shared basis, and the PUCCH (Physical Uplink Control Channel), which is an uplink control channel. User data is transmitted by this PUSCH. The PUCCH transmits downlink radio quality information (CQI: Channel Quality Indicator), ACK/NACK and so on, and, although intra-subframe frequency hopping applies in SC-FDMA, in clustered DFT-spread OFDM, intra-subframe frequency hopping does not apply, because a frequency scheduling effect can be achieved without intra-subframe frequency hopping.

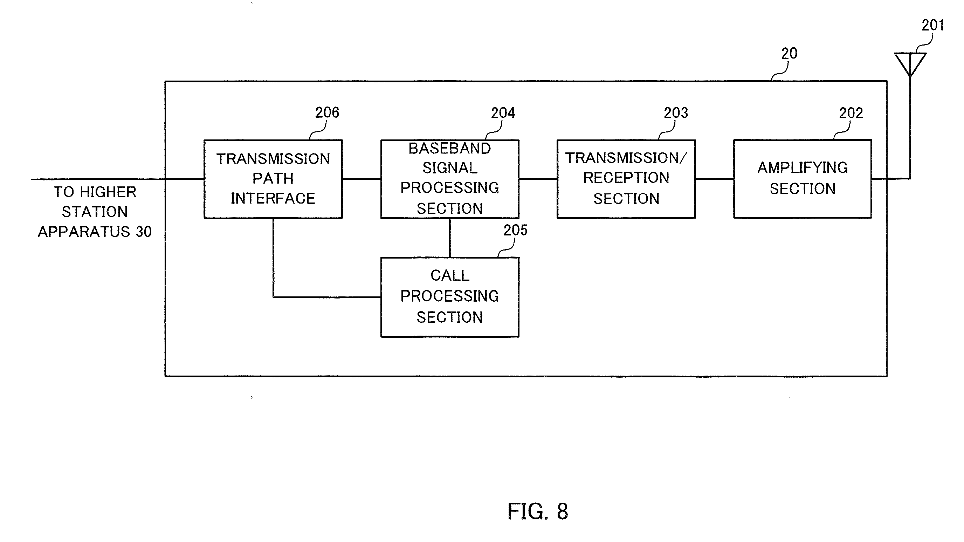

According to the present embodiment an overall configuration of the base station apparatus 20 will be described with reference to FIG. 8. The base station apparatus 20 has a transmitting/receiving antenna 201, an amplifying section 202, a transmission/reception section 203, a baseband signal processing section 204, a call processing section 205, and a transmission path interface 206.

User data to be transmitted from the base station apparatus 20 to the mobile terminal apparatus 10 on the downlink is input from the higher station apparatus 30 in the baseband signal processing section 204, via the transmission path interface 206.

In the baseband signal processing section 204, PDCP layer processing, division and coupling of user data, RLC (Radio Link Control) layer transmission processing such as RLC retransmission control transmission processing, MAC (Medium Access Control) retransmission control, including, for example, HARQ (Hybrid Automatic Repeat reQuest) transmission processing, scheduling, transport format selection, channel coding, inverse fast Fourier transform (IFFT) processing, and precoding processing, are performed. Furthermore, as with signals of the physical downlink control channel, which is a downlink control channel, transmission processing such as channel coding and inverse fast Fourier transform is performed.

Also, the baseband signal processing section 204 reports control information for allowing each mobile terminal apparatus 10 to communicate with the base station apparatus 20, to the mobile terminal apparatuses 10 connected to the same cell 50, by a broadcast channel. Broadcast information for communication in the cell 50 includes, for example, the uplink or downlink system bandwidth, identification information of a root sequence (root sequence index) for generating random access preamble signals in the PRACH, and so on.

In the transmission/reception section 203, the baseband signal output from the baseband signal processing section 204 is subjected to frequency conversion into a radio frequency band. The amplifying section 202 amplifies the transmission signal subjected to frequency conversion, and outputs the result to the transmission/reception antenna 201.

Meanwhile, as for signals to be transmitted on the uplink from the mobile terminal apparatus 10 to the base station apparatus 20, a radio frequency signal that is received in the transmission/reception antenna 201 is amplified in the amplifying section 202, subjected to frequency conversion and converted into a baseband signal in the transmission/reception section 203, and is input to the baseband signal processing section 204.

The baseband signal processing section 204 performs FFT processing, IDFT processing, error correction decoding, MAC retransmission control reception processing, and RLC layer and PDCP layer reception processing of the user data included in the baseband signal that is received on the uplink. The decoded signal is transferred to the higher station apparatus 30 through the transmission path interface 206.

The call processing section 205 performs call processing such as setting up and releasing a communication channel, manages the state of the base station apparatus 20 and manages the radio resources.

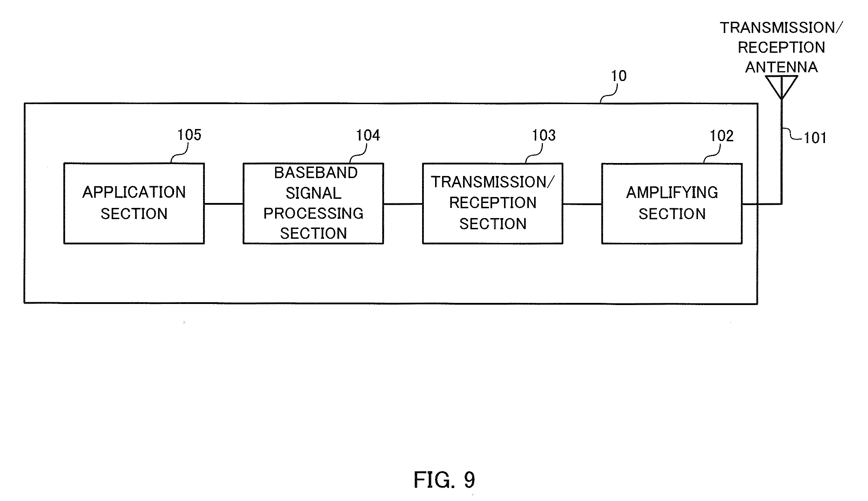

Next, referring to FIG. 9, an overall configuration of the mobile terminal apparatus 10 according to the present embodiment will be described. An LTE terminal and an LTE-A terminal have the same hardware configurations in the principle parts, and therefore will be described indiscriminately. The mobile terminal apparatus 10 has a transmitting/receiving antenna 101, an amplifying section 102, a transmission/reception section 103, a baseband signal processing section 104, and an application section 105.

As for downlink data, a radio frequency signal that is received in the transmission/reception antenna 101 is amplified in the amplifying section 102, and subjected to frequency conversion into a baseband signal in the transmission/reception section 103. This baseband signal is subjected to reception processing such as FFT processing, error correction decoding and retransmission control and so on in the baseband signal processing section 104. In this downlink data, downlink user data is transferred to the application section 105. The application section 105 performs processing related to higher layers above the physical layer and the MAC layer. Also, in the downlink data, broadcast information is also transferred to the application section 105.

On the other hand, uplink user data is input from the application section 105 to the baseband signal processing section 104. In the baseband signal processing section 104, retransmission control (HARQ (Hybrid ARQ)) transmission processing, channel coding, DFT processing, IFFT processing and so on are performed. The baseband signal output from the baseband signal processing section 104 is converted into a radio frequency band in the transmission/reception section 103, and, after that, amplified in the amplifying section 102 and transmitted from the transmission/reception antenna 101.

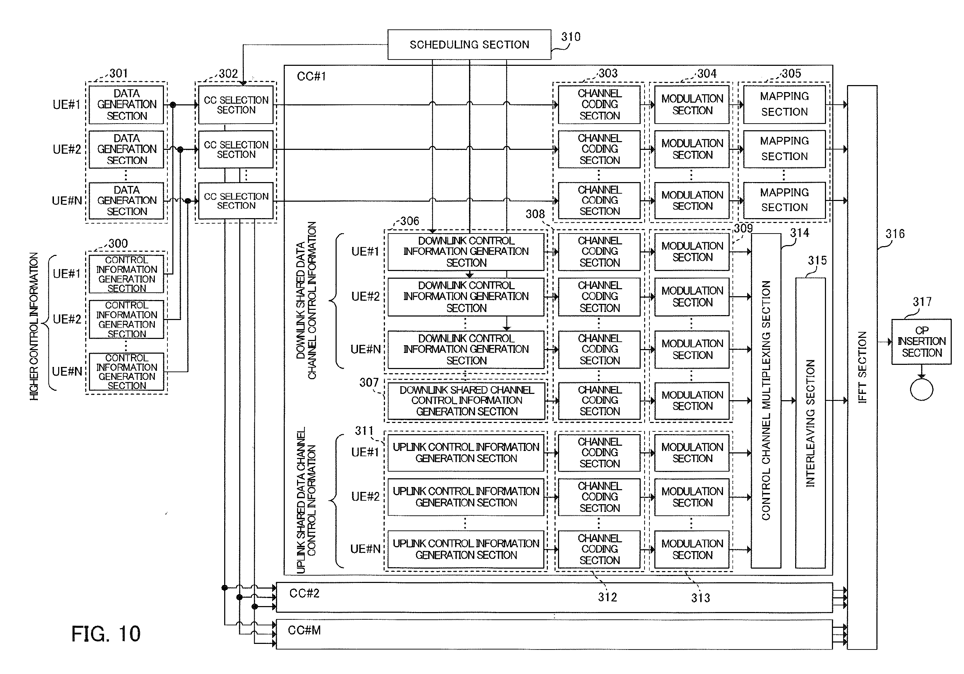

FIG. 10 is a functional block diagram of a baseband signal processing section 204 and part of the higher layers provided in the base station apparatus 20 according to the present embodiment, and primarily illustrates the function blocks of the transmission processing section in the baseband signal processing section 204. FIG. 10 illustrates an example of a base station configuration which can support maximum M (CC #1 to CC #M) component carriers. Transmission data for the mobile terminal apparatus 10 under the base station apparatus 20 is transferred from the higher station apparatus 30 to the base station apparatus 20.

A control information generation section 300 generates higher control signals for performing higher layer signaling (for example, RRC signaling), on a per user basis. The higher control signals may include a command to request addition/removal of component carriers CC.

The data generation section 301 outputs the transmission data transferred from the higher station apparatus 30 separately as user data.

The component carrier selection section 302 selects component carriers to use in radio communication with the mobile terminal apparatus 10 on a per user basis. As described above, addition/removal of component carriers is reported from the base station apparatus 20 to the mobile terminal apparatus 10 by RRC signaling, and a complete message is received from the mobile terminal apparatus 10. As this complete message is received, assignment (addition/removal) of component carriers to that user is fixed, and the fixed component carrier assignment is set in the component carrier selection section 302 as component carrier assignment information. In accordance with the component carrier assignment information that is set in the component carrier selection section 302 on a per user basis, higher control signals and transmission data are allocated to the component carrier channel coding section 303 of the applicable component carrier.

The scheduling section 310 controls assignment of component carriers to a serving mobile terminal apparatus 10 according to overall communication quality of the system band. The scheduling section 310 determines addition/removal of component carriers to assign for communication with the mobile terminal apparatus 10. A decision result related to addition/removal of component carriers is reported to the control information generation section 300. In uplink scheduling, one of SC-FDMA and clustered DFT-spread OFDM is controlled dynamically (on a per subframe basis). For component carriers (uplink) to which clustered DFT-spread OFDM is applied, the number of clusters and the resources for the clusters are determined.

Also, the scheduling section 310 controls resource allocation in component carriers CC #1 to CC #M. The LTE terminal user and the LTE-A terminal user are scheduled separately. Also, the scheduling section 310 receives as input the transmission data and retransmission command from the higher station apparatus 30, and also receives as input the channel estimation values and resource block CQIs from the reception section having measured an uplink received signal. The scheduling section 310 schedules downlink assignment information, uplink assignment information and uplink/downlink shared channel signals, with reference to the retransmission command, channel estimation values and CQIs that are received as input from the higher station apparatus 30. A propagation path in mobile communication varies differently per frequency, due to frequency selective fading. So, upon transmission of user data to the mobile terminal apparatus 10, resource blocks of good communication quality are assigned to each mobile terminal apparatus 10, on a per subframe basis (which is referred to as "adaptive frequency scheduling"). In adaptive frequency scheduling, for each resource block, a mobile terminal apparatus 10 of good propagation path quality is selected and assigned. Consequently, the scheduling section 300 assigns resource blocks, with which improvement of throughput is anticipated, using the CQI of each resource block, fed back from each mobile terminal apparatus 10. On the uplink where clustered DFT-spread OFDM is applied, resource blocks are assigned on a per cluster basis. Also, the MCS (Coding rate and Modulation Scheme) to fulfill a required block error rate with the assigned resource blocks is determined. Parameters to fulfill the MCS (Coding rate and Modulation Scheme) determined by the scheduling section 310 are set in the channel coding sections 303, 308 and 312, and in the modulation sections 304, 309 and 313.

The baseband signal processing section 204 has channel coding sections 303, modulation sections 304, and mapping sections 305, to match the maximum number of users to be multiplexed, N, in one component carrier. The channel coding section 303 performs channel coding of the shared data channel (PDSCH), formed with user data (including part of higher control signals) that is output from the data generation section 301, on a per user basis. The modulation section 304 modulates user data having been subjected to channel coding, on a per user basis. The mapping section 305 maps the modulated user data to radio resources.

Also, the baseband signal processing section 204 has a downlink control information generation section 306 that generates downlink shared data channel control information, which is user-specific downlink control information, and a downlink shared channel control information generation section 307 that generates downlink shared control channel control information, which is user-common downlink control information.

Downlink assignment information of DCI format 1 is downlink shared data channel control information. The downlink control information generation section 306 generates downlink assignment information (for example, DCI format 1), from the resource allocation information, MCS information, HARQ information, PUCCH transmission power control command, and so on, determined on a per user basis. DCI format 1 is arranged in the search space determined according to the rules of LTE.

The baseband signal processing section 204 has channel coding sections 308 and modulation sections 309 to match the maximum number of users to be multiplexed, N, in one component carrier. The channel coding section 308 performs channel coding of control information generated in the downlink control information generation section 306 and downlink shared channel control information generation section 307, on a per user basis. The modulation section 309 modulates the downlink control information after channel coding.

Also, the baseband signal processing section 204 has an uplink control information generation section 311 that generates, on a per user basis, uplink shared data channel control information, which is control information for controlling the uplink shared data channel (PUSCH),a channel coding section 312 that performs, on a per user basis, channel coding of uplink shared data channel control information generated, and a modulation section 313 that modulates, on a per user basis, uplink shared data channel control information having been subjected to channel coding.

The uplink assignment information formed in DCI format 0 and DCI format 0A is uplink shared data channel control information. The uplink control information generation section 311 generates uplink assignment information from uplink resource allocation information (cluster) that is determined per user, MCS information and redundancy version (RV), an identifier (new data indicator) to identify between new data and retransmission data, a PUCCH transmission power control command (TPC), cyclic shift for the demodulation reference signal (CS for DMRS), CQI request, and so on. In subframes (component carriers) where SC-FDMA is selected for the uplink radio access scheme, uplink assignment information of DCI format 0 is generated according to the rules defined in LTE. On the other hand, in subframes (component carriers) where clustered DFT-spread OFDM is selected for the uplink radio access scheme, for example, uplink assignment information of DCI format 0A that is generated according to the first invention is generated. With the first invention, DCI format 0A shown in FIG. 3B is used, bits to represent type* and subset (P-1) (woshift/wshift) are arranged in the top header of DCI format 0A, and one of the RB arrangement patterns of type 1 shown in FIGs. 2B and 2C is used for resource allocation information. Also, in the event the second invention is applied, for the resource allocation information on DCI format 0A, the RB arrangement pattern (when the system band is 10 MHz or smaller) shown in FIG. 4 is applied, or the RB arrangement pattern (when the system band is 15 MHz or greater) shown in FIG. 5 is applied. Also, with the third invention, DCI format 0A' shown in FIG. 6C is used, an identification bit "1" is set at the end of DCI format 0A', and one of the RB arrangement patterns of type 0/1 shown in FIGs. 2A, 2B and 2C for resource allocation information is used.

The control information that is modulated on a per user basis in the above modulation sections 309 and 313 is multiplexed in the control channel multiplexing section 314 and furthermore interleaved in an interleaving section 315. A control signal that is output from the interleaving section 315 and user data that is output from the mapping section 305 are input in an IFFT section 316 as downlink channel signals. The IFFT section 316 converts the downlink channel signal from a frequency domain signal into a time sequence signal by performing an inverse fast Fourier transform. A cyclic prefix insertion section 317 inserts cyclic prefixes in the time sequence signal of the downlink channel signal. Note that a cyclic prefix functions as a guard interval for cancelling the differences in multipath propagation delay. The transmission data, to which cyclic prefixes are added, is transmitted to the transmission/reception section 203.

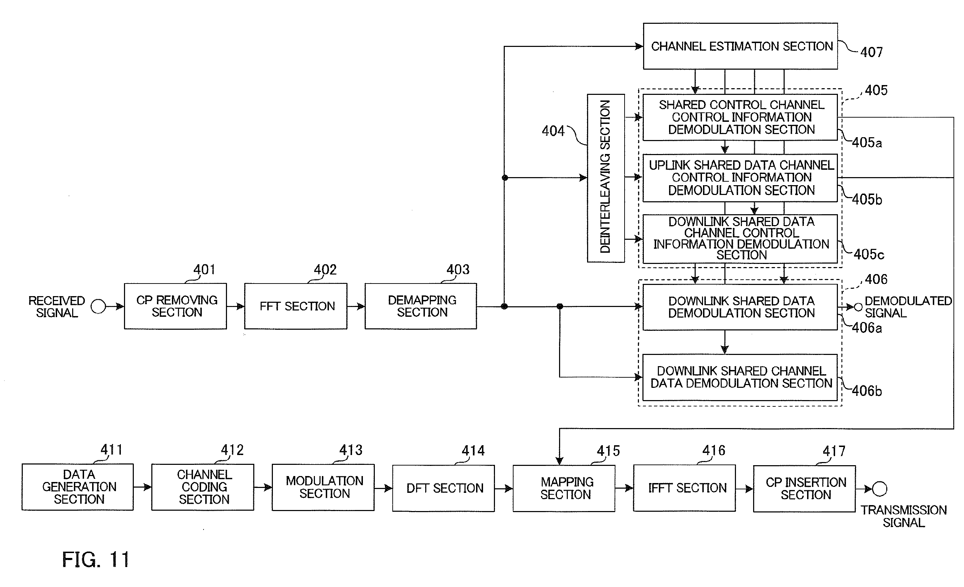

FIG. 11 is a functional block diagram of a baseband signal processing section 104 provided in the mobile terminal apparatus 10, illustrating function blocks of an LTE-A terminal which supports LTE-A. First, the downlink configuration of the mobile terminal apparatus 10 will be described.

The CP removing section 401 removes the CPs from a downlink signal received from the radio base station apparatus 20 as received data. The downlink signal, from which the CPs have been removed, is input in a FFT section 402. The FFT section 402 performs a fast Fourier transform (FFT) on the downlink signal, converts the time-domain signal into a frequency domain signal, and inputs the frequency domain signal in a demapping section 403. The demapping section 403 demaps the downlink signal, and extracts, from the downlink signal, multiplex control information in which a plurality of pieces of control information are multiplexed, user data, and higher control signals. Note that the demapping process by the demapping section 403 is performed based on higher control signals that are received as input from the application section 105. Multiplex control information that is output from the demapping section 403 is deinterleaved in the deinterleaving section 404.

Also, the baseband signal processing section 104 has a control information demodulation section 405 that demodulates control information, a data demodulation section 406 that demodulates downlink shared data, and a channel estimation section 407. The control information demodulation section 405 includes a shared control channel control information demodulation section 405a that demodulates downlink shared control channel control information from the multiplex control information, an uplink shared data channel control information demodulation section 405b that demodulates uplink shared data channel control information from the multiplex control information, and a downlink shared data channel control information demodulation section 405c that demodulates downlink shared data channel control information from the multiplex control information. The data demodulation section 406 includes a downlink shared data demodulation section 406a that demodulates the user data and higher control signals, and a downlink shared channel data demodulation section 1406b that demodulates downlink shared channel data.

The shared control channel control information demodulation section 405a extracts shared control channel control information, which is user-common control information, by the blind decoding process, demodulation process, channel decoding process and so on of the common search space of the multiplex control information (PDCCH). The shared control channel control information includes downlink channel quality information (CQI), and therefore is input in the mapping section 115 (described later), and mapped as part of transmission data for the radio base station apparatus 20.

The uplink shared data channel control information demodulation section 405b extracts uplink shared data channel control information, which is user-specific uplink assignment information, by the blind decoding process, demodulation process, channel decoding process and so on, of the user-specific search spaces of the multiplex control information (PDCCH). The uplink allocation information is used to control the uplink shared data channel (PUSCH), and is input in the downlink shared channel data demodulation section 406b. Here, if SC-FDMA is applied as the uplink radio access scheme, uplink assignment information of DCI format 0 is demodulated, but, if clustered DFT-spread OFDM is applied, uplink assignment information of DCI format 0A/0A' by one of the first to third methods is demodulated.

The downlink shared data channel control information demodulation section 405c extracts uplink shared data channel control information, which is user-specific downlink control signals, by the blind decoding process, demodulation process, channel decoding process and so on, of the user-specific search spaces of the multiplex control information (PDCCH). The downlink shared data channel control information is used to control the downlink shared data channel (PDSCH), and is input in the downlink shared data demodulation section 406.

Also, the downlink shared data channel control information demodulation section 405c performs the blind decoding process of the user-specific search spaces, based on information which relates to the PDCCH and PDSCH and which is included in the higher control signals demodulated in the downlink shared data demodulation section 406a.

The downlink shared data demodulation section 406a acquires the user data, higher control information and so on, based on the downlink shared data channel control information received as input from the downlink shared data channel control information demodulation section 405c. The higher control information (including mode information) is output to a channel estimation section 407. The downlink shared channel data demodulation section 406b demodulates downlink shared channel data based on the uplink shared data channel control information that is input from uplink shared data channel control information demodulation section 405b.

The channel estimation section 407 performs channel estimation using common reference signals. The estimated channel variation is output to the shared control channel control information demodulation section 405a, the uplink shared data channel control information demodulation section 405b, the downlink shared data channel control information demodulation section 405c and the downlink shared data demodulation section 406a. These demodulation sections demodulate downlink allocation information using the estimated channel variation and demodulation reference signals.

The baseband signal processing section 104 has, as function blocks of the transmission processing system, a data generation section 411, a channel coding section 412, a modulation section 413, a DFT section 414, a mapping section 415, an IFFT section 416, and a CP insertion section 417. The data generation section 411 generates transmission data from bit data that is received as input from the application section 105. The channel coding section 412 applies channel coding processing such as error correction to the transmission data, and the modulation section 413 modulates the transmission data subjected to channel coding by QPSK and so on. The DFT section 414 performs a discrete Fourier transform on the modulated transmission data. The mapping section 415 maps the frequency components of the data symbols after the DFT, to the subcarrier positions designated by the base station apparatus. Here, in the event clustered DFT-spread OFDM is applied to the uplink, resource allocation information of each demodulated cluster is reported from the uplink shared data channel control information demodulation section 405b. That is to say, the frequency components of a data symbol are input in the subcarrier positions, in the IFFT section 416, corresponding to each cluster having a bandwidth to match the system band, and 0 is set in the other frequency components. If SC-FDMA is applied, the frequency components of a data symbol are input in continuous subcarrier positions that match a single carrier, and 0 is set in the other frequency components. The IFFT section 416 performs an inverse fast Fourier transform on input data to match the system band and converts the input data into time sequence data, and the CP insertion section 417 inserts cyclic prefixes in the time sequence data per data segment.

Next, signaling of uplink assignment information according to the first invention will be described. The base station apparatus 20 assigns one or a plurality of component carriers (CC #1, CC #2, CC #3 ...) to user UE #1. For every component carrier assigned to user UE #1, the scheduling section 310 dynamically assigns and controls one of clustered DFT-spread OFDM and SC-FDMA in uplink scheduling. Assigned uplink radio access scheme information (clustered DFT-spread OFDM or SC-FDMA) is reported to the mobile terminal apparatus 10 by RRC signaling. Now, a case will be described below where component carrier CC #1 is assigned to user UE #1 and clustered DFT-spread OFDM is applied to the uplink of component carrier CC #1. When SC-FDMA is applied to the uplink, the operations defined in LTE are carried out, and therefore detailed descriptions will be omitted.

The scheduling section 310 assigns radio resources to each cluster as shown in FIG. 1, and reports each cluster's resource allocation information to the uplink control information generation section 311 (UE #1) that generates uplink shared data channel control information for user UE #1. The other information to constitute the uplink assignment information is also reported to the uplink control information generation section 311 (UE #1).

The uplink control information generation section 311 (UE #1) generates uplink assignment information (DCI format 0A), formed as shown in FIG. 3B, on a per subframe basis. That is to say, if the system band is 10 MHz, one RB arrangement pattern is selected from a plurality of RB arrangement patterns shown in FIG. 2B and 2C, and designates the resources to allocate to each cluster in a bitmap format to the selected RB arrangement pattern. Note that the RB arrangement patterns used for the identification flag of DCI format 1 and DCI format 0A are excluded from the selection. In FIG. 2B, "Type 1, Subset (2) (woshift)," which represents the RB arrangement pattern that is shifted the most to the right, is preferable as an identification flag. "Type 1, Subset (2) (woshift)," which is the identification flag, is set in the top four bits of DCI format 0A. As a result of this, as shown in FIG. 3B, bits to represent "Type 1, Subset (2) (woshift)" are set in the top four bits, an RB arrangement pattern to designate the resources to allocate to each cluster in a bitmap format is set in the resource allocation information, and uplink assignment information (DCI format 0A) to have the same bit size as downlink assignment information DCI format 1 is generated.

Note that downlink assignment information for user UE #1 is generated in the downlink control information generation section 306 (UE #1), which generates the downlink shared data channel control information for user UE #1. The downlink control information generation section 306 (UE #1) generates downlink assignment information (DCI format 1) from the resource allocation information, MCS information, information for HARQ, PUCCH transmission power control command and so on, determined with respect to user UE #1. This downlink assignment information (DCI format 1) is formed in the same bit size as the uplink assignment information (DCI format 0A) to be multiplexed in the same subframe.

The downlink assignment information (DCI format 1) and uplink assignment information (DCI format 0A) for user UE #1 are subjected to channel coding in the channel coding sections 308 and 312, and, after the modulation in the modulation sections 309 and 313, subjected to channel multiplexing in the control channel multiplexing section 314. After that, to achieve a frequency diversity effect, the interleaving section 315 performs interleaving (CCE interleaving) per REG (which is an abbreviation for "Resource Element Group" and is formed with four REs). Then, the result is mapped to the top of the same subframe and transmitted.

Meanwhile, the mobile terminal apparatus 10, which serves as user UE #1, identifies the uplink radio access scheme reported by RRC signaling, and controls the uplink radio access by the identified uplink radio access scheme (clustered DFT-spread OFDM or SC-FDMA). The mobile terminal apparatus 10 receives the PDCCH on the downlink. The deinterleaving section 404 de-interleaves the PDCCH mapped to the first through third OFDM symbols at the top of the subframe. The rate matching parameter (the number of CCEs) and the CCE starting position are not clear, and therefore the control information generation section 405 performs blind decoding per CCE and searches for a CCE where the CRC masked by the user ID is "OK." The uplink assignment information (DCI format 0A) has the same bit size as the downlink assignment information (DCI format 1) and can be searched for in one blind decoding.

The uplink shared data channel control information demodulation section 405b searches for shared data channel control information for own apparatus by performing blind decoding of the search space of the PDCCH. The top four bits of the searched shared data channel control information for own apparatus are interpreted, and, if bits to represent "Type 1, Subset (2) (woshift)" are set in the top four bits, the searched shared data channel control information is identified and taken in as uplink assignment information (DCI format 0A). Although the uplink assignment information (DCI format 0A) and the downlink assignment information (DCI format 1) have the same bit size and both can be detected in one blind decoding, if the top four bits of the shared data channel control information are not "Type 1, Subset (2) (woshift)," the shared data channel control information is determined not to be uplink assignment information (DCI format 0A) and can be discarded.

Note that the downlink shared data channel control information demodulation section 405a searches for shared data channel control information for own apparatus by performing blind decoding of the search space of the PDCCH. As a result of this, although the uplink assignment information (DCI format 0A) and the downlink assignment information (DCI format 1) having the same bit size can be both detected in one blind decoding, if the top four bits of the shared data channel control information are not "Type 1, Subset (2) (woshift)," the shared data channel control information is taken in as downlink assignment information (DCI format 1).

The uplink shared data channel control information demodulation section 405b interprets the bit data constituting the searched uplink assignment information for own apparatus, according to the configuration shown in FIG. 3B. Then, the resource allocation information of a bitmap format and other parameters (MCS information and so on) are extracted from DCI format 0A. The resource allocation information per cluster is given to the mapping section 415. Also, the other parameters extracted from DCI format 0A are given to the applicable blocks such as the channel coding section 412, modulation section 413 and so on.

The uplink transmission data is subjected to channel coding processing such as error correction and so on in the channel coding section 412, and modulated in the modulation section 413 by QPSK and so on. The modulated transmission data is subjected to a discrete Fourier transform and converted into frequency domain components in the DFT section 414, and, in the mapping section 415, mapped to the resources allocated to each cluster, signaled using DCI format 0A. The IFFT section 416 performs an inverse fast Fourier transform on input data to match the system band and converts this input data into time sequence data, and, after cyclic prefixes are inserted in the CP insertion section 417, the time sequence data is transmitted by radio.

In this way, uplink assignment information (DCI format 0A), including uplink resource allocation information in which resources are allocated in a bitmap format, is defined, this uplink assignment information (DCI format 0A) is formed in the same bit size as downlink assignment information (for example, DCI format 1) including downlink resource allocation information in which resources are allocated on a bitmap basis, and the interpretation of part of the bits of the downlink assignment information (DCI format 1) is changed, so that it is possible to identify uplink assignment information of the same bit size without adding bits for format identification. As a result of this, the mobile terminal apparatus 10 can detect uplink assignment information (DCI format 0A) and downlink assignment information (for example, DCI format 1) of the same bit size in one blind decoding, and therefore can prevent the number of blind decoding from increasing. Also, uplink assignment information (DCI format 0A) to include uplink resource allocation information, in which resources are allocated in a bitmap format, is defined, so that it is possible to ensure approximately the same number of bits for resource allocation information as for downlink assignment information (for example, DCI format 1) and represent resource allocation information for a plurality of clusters in a bitmap format.

Next, signaling of uplink assignment information by the second invention will be described. A case will be described here where component carrier CC #1 is assigned to user UE #1 and clustered DFT-spread OFDM is applied to the uplink of component carrier CC #1. When SC-FDMA is applied to the uplink, the operations defined in LTE are carried out, and therefore detailed descriptions will be omitted. Also, although the radio access scheme to be applied to the uplink can be switched dynamically to either clustered DFT-spread OFDM or SC-FDMA, the switching is controlled by RRC signaling, as described earlier.

The scheduling section 310 determines the number of clusters to use for the uplink data channel, allocates radio resources to each cluster as shown in FIG. 1, and reports each cluster's resource allocation information to the uplink control information generation section 311 (UE #1). The other information to constitute the uplink assignment information is also reported to the uplink control information generation section 311 (UE #1).

The uplink control information generation section 311 (UE #1) generates uplink assignment information (DCI format 0A), formed as shown in FIG. 3C, on a per subframe basis. That is to say, when the system band is 15 MHz and the number of clusters is three, one RB arrangement pattern is selected from the first to fourth RB arrangement patterns shown in FIG. 5A. For example, when the RB arrangement pattern of HD=00 is selected, resources of the band from RBG index 0 to RBG index 11 (the left half of the system band) can be allocated, and when the RB arrangement pattern of HD=01 is selected, resources of the band from the RBG index 12 to RBG index 17 (the left half of the system band) can be allocated. When the RB arrangement pattern of HD=10 or HD=11 is selected, resources can be allocated evenly, at one-RBG intervals, from the RBG index 0 to RBG index 18. The uplink control information generation section 311 (UE #1) sets a bit to represent the uplink in the top bit of the uplink assignment information (DCI format 0A) shown in FIG. 3C, and sets an RB arrangement pattern identifier (HD) in the top two bits of the resource allocation information. The RBG positions allocated to each cluster on the selected RB arrangement pattern are designated using the rest of the bits of the resource allocation information. In this way, when the number of clusters is three or greater, the RBG positions allocated to each cluster are designated using an RB arrangement pattern punctured in RBG units.

As a result of this, as shown in FIG. 3C, uplink assignment information (DCI format 0A) that has the same bit size, that can identify the uplink and downlink by a top one bit, and that can identify the RB arrangement pattern by two HD bits, is generated.

Note that, when the system band is equal to or greater than 10 MHz, the RB arrangement patterns shown in FIG. 4 are selected in accordance with the system band, and the RBG positions assigned to each cluster are designated. In this case, in the resource allocation information in the uplink assignment information (DCI format 0A), an HD, which is an identifier to identify the RB arrangement pattern is not necessary.

The uplink assignment information (DCI format 0A) that is generated in this way is multiplexed over the same subframe with the downlink assignment information DCI format 1 generated in the downlink control information generation section 306 (UE #1), which corresponds to user UE #1, and transmitted.

Meanwhile, when the mobile terminal apparatus 10 to serve as user UE #1 receives the PDCCH on the downlink, the control information demodulation section 405 performs blind decoding in CCE units and searches for a CCE where the CRC masked by the user ID is "OK." Since the uplink assignment information (DCI format 0A) and existing uplink assignment information (DCI format 0) have the same bit size, it is not necessary to increase the number of times to perform blind decoding to demodulate the uplink assignment information (DCI format 0A) that is presently defined.

The uplink shared data channel control information demodulation section 405b performs blind decoding of the search space in the PDCCH, interprets the top bit of the shared data channel control information for own apparatus, and, if a bit to represent an uplink resource allocation header is set, identifies the shared data channel control information as uplink assignment information (DCI format 0A) and takes in.

Note that the downlink shared data channel control information demodulation section 405a searches for shared data channel control information for own apparatus by performing blind decoding of the search space of the PDCCH. As a result of this, although the uplink assignment information (DCI format 0A) and the downlink assignment information (DCI format 1) having the same bit size can be both detected in one blind decoding, if a bit to represent a downlink resource allocation header is set in the top one bit of the shared data channel control information, the shared data channel control information is taken in as downlink assignment information (DCI format 1).

The uplink shared data channel control information demodulation section 405b interprets the bit data constituting the searched uplink assignment information for own apparatus, according to the configuration shown in FIG. 3C. Then, the resource allocation information of a bitmap format and other parameters (MCS information and so on) are extracted from DCI format 0A. The details of the following operations are the same as the uplink transmission operations of the first invention described earlier.

In this way, to allow uplink assignment information (DCI format 0A), in which resources are allocated in a bitmap format, to be formed in the same number of bits as existing uplink assignment information (DCI format 0), a plurality of punctured bitmap patterns, which are punctured in RBG units, are prepared, and one of the punctured bitmap patterns is applied to the resource allocation information on DCI format 0A, so that it is possible to represent uplink resource allocation, to which clustered DFT-spread OFDM is applied, on a bitmap basis, and, given that number of bits is the same as existing uplink assignment information (DCI format 0), simplify the process, by making it unnecessary to change the interpretation of part of DCI format 1 like the first invention.

Next, signaling of uplink assignment information according to the third invention will be described. A case will be described here where component carrier CC #1 is assigned to user UE #1 and clustered DFT-spread OFDM is applied to the uplink of component carrier CC #1.

The scheduling section 310 determines the number of clusters to use for uplink radio access, allocates radio resources to each cluster as shown in FIG. 1, and reports each cluster's resource allocation information to the uplink control information generation section 311 (UE #1). The other information to constitute the uplink assignment information is also reported to the uplink control information generation section 311 (UE #1). Also, the scheduling section 310 sets DCI format 1 and DCI format 1' in a semi-fixed manner. The downlink DCI configuration (that is, whether or not there is an identification bit) is signaled by higher control signals. A case will be described here where DCI format 1' is selected.

The uplink control information generation section 311 (UE #1) generates uplink assignment information (DCI format 0A'), formed as shown in FIG. 6C, on a per subframe basis. That is to say, "1" is set as an additional bit to be provided at the tail of DCI format 0A', and, for the resource allocation information, resources to allocate to each cluster in a bitmap format are designated in the same way as the second invention described above.

The downlink control information generation section 306 (UE #1) for downlink user UE #1 generates downlink assignment information (DCI format 1') that is formed as shown in FIG. 6B, on a per subframe basis. That is to say, "0" is set as an additional bit to be provided at the tail of DCI format 1, and, for the resource allocation information, resources to allocate are designated in a bitmap format. The downlink assignment information (DCI format 1') is formed in the same bit size as the uplink assignment information (DCI format 0A') that is multiplexed in the same subframe.

The uplink assignment information (DCI format 0A') that is generated in this way is multiplexed over the same subframe with the downlink assignment information DCI format 1 generated in the downlink control information generation section 306 (UE #1), which corresponds to user UE #1, and transmitted.

Meanwhile, when the mobile terminal apparatus 10 to serve as user UE #1 receives the PDCCH on the downlink, the control information demodulation section 405 performs blind decoding in CCE units and searches for a CCE where the CRC masked by the user ID is "OK." Then, since it has been reported in advance, by higher control information, that the uplink assignment information (DCI format 0A') includes an identification bit, blind decoding is performed in a bit size in which one bit is added to DCI format 0.

The uplink assignment information (DCI format 0A') has the same bit size as downlink assignment information (DCI format 1'), it is not necessary to increase the number of times to perform blind decoding to demodulate the uplink assignment information (DCI format 0A') that is presently defined.

The uplink shared data channel control information demodulation section 405b performs blind decoding of the search space of the PDCCH, interprets the identification bit at the tail of shared data channel control information for own apparatus, and, if a bit to represent the uplink is set, identifies and takes in the shared data channel control information as uplink assignment information (DCI format 0A').

Note that the downlink shared data channel control information demodulation section 405a performs blind decoding of the search space of the PDCCH and searches for shared data channel control information for own apparatus. This time, too, since it has been reported in advance, by higher control information, that the uplink assignment information (DCI format 0A') includes an identification bit, blind decoding is performed in a bit size in which one bit is added to DCI format 1. As a result of this, although the uplink assignment information (DCI format 0A) and the downlink assignment information (DCI format 1) having the same bit size can be both detected in one blind decoding, if a bit to represent the downlink is set as an identification bit at the tail of the shared data channel control information, the shared data channel control information is identified and taken in as downlink assignment information (DCI format 1')

The uplink shared data channel control information demodulation section 405b interprets the bit data constituting the searched uplink assignment information for own apparatus, according to the configuration shown in FIG. 6C. Then, the resource allocation information of a bitmap format and other parameters (MCS information and so on) are extracted from DCI format 0A'. The details of the following operations are the same as the uplink transmission operations of the first invention described earlier.

In the above descriptions, although a case has been described where clustered DFT-spread OFDM is applied to uplink radio access, which is agreed on in LTE-A, the radio access scheme to assign a plurality of frequency bands to one user on the uplink is not limited to clustered DFT-spread OFDM. For example, the present invention is effective in cases where OFDMA is applied as the uplink radio access scheme. The present invention employs a DCI format configuration that is optimal to designate uplink resource allocation in a bitmap format, so that it is possible to signal uplink resource allocation, to which OFDMA is applied, in a bitmap format, without increasing the DCI format size.

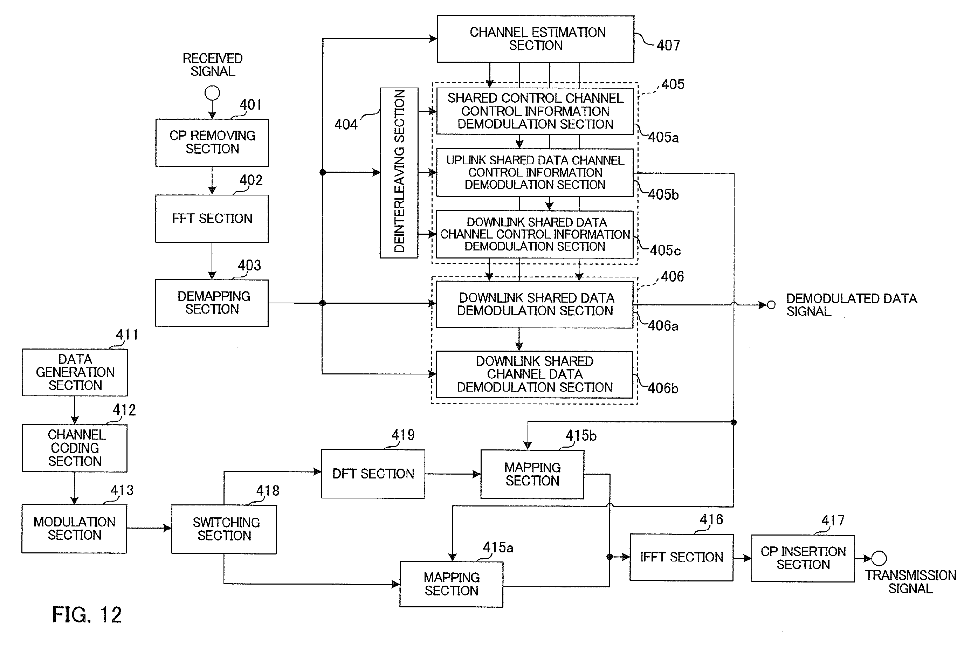

FIG. 12 is a configuration diagram of a mobile terminal apparatus that makes it possible to switch the uplink radio access scheme between SC-FDMA and OFDM. The same parts as in the mobile terminal apparatus 10 shown in FIG. 11 are assigned the same codes. In the event the uplink radio access scheme can be switched between SC-FDMA and OFDM, in the same way as when SC-FDMA and clustered DFT-spread OFDM are switched dynamically, the base station apparatus 20 reports which one of SC-FDMA and OFDM is assigned, by RRC signaling. The mobile terminal apparatus applies the radio access scheme given by RRC signaling, to uplink radio communication.

The mobile terminal apparatus shown in FIG. 12 has a mapping section 415a that performs mapping that supports SC-FDMA and a mapping section 415b that performs mapping that supports OFDM. When OFDM is applied to uplink radio access, transmission data is not subjected to the DFT, so that the output of the modulation section 413 is directly input in the mapping section 415b, via the switching section 418. The mapping section 415b maps a transmission symbol to frequency domain components, according to the resource allocation.

The radio base station 20 assigns component carrier CC #1 to user UE #1, and selects SC-FDMA or OFDM as the uplink radio access scheme for component carrier CC #1. The control information generation section 300 signals the uplink radio access scheme by higher control signals.

The scheduling section 310 allocates resources to match a single carrier, if SC-FDMA is selected. Also, if OFDM is selected for uplink radio access, resources are allocated in RB units, in the same way as downlink resource allocation. The uplink resource allocation information is reported to the uplink control information generation section 311 (UE #1).

In the mobile terminal apparatus, the switching section 418 switches the signal sequence of transmission data, according to the uplink radio access scheme that is signaled by higher control signals. The mapping section 415b is selected if SC-FDMA is selected, and the mapping section 415a is selected if OFDM is selected. Demodulated uplink resource allocation information is given to the selected mapping section 415a or 415b, as in the above-described embodiment.

In this way, it is made possible to switch the uplink radio access scheme between SC-FDMA and OFDM, thereby making it possible to allocate resources in a bitmap format no matter what radio access scheme is used.

Also, it is equally possible to select, dynamically, the uplink radio access scheme between SC-FDMA, clustered DFT-spread OFDM, and OFDM and report the selected scheme by RRC signaling. The operations in each selected access scheme are as described above. Also, for the uplink radio access scheme, it is equally possible to select one of SC-FDMA alone, the combination of SC-FDMA and clustered DFT-spread OFDM, the combination of SC-FDMA and OFDM and the combination of SC-FDMA, clustered DFT-spread OFDM and OFDM.

The disclosure of Japanese Patent Application No. 2010-087381, filed on April 5, 2010, including the specification, drawings, and abstract, is incorporated herein by reference in its entirety.

## Claims

1. A radio communication control apparatus comprising:
a downlink control information generation section configured to generate downlink assignment information including control information for demodulation of a downlink data channel;
an uplink control information generation section configured to generate uplink assignment information including control information for demodulation of an uplink data channel;
a control channel multiplexing section configured to multiplex the uplink assignment information and the downlink assignment information over a control channel; and
a transmission section configured to transmit by radio the uplink assignment information and the downlink assignment information multiplexed over the control channel, wherein:
the downlink control information generation section is configured to:
arrange resource allocation information related to a radio resource allocated to the downlink data channel, in the downlink assignment information, in a bitmap format;
assign the resource allocation information, in the bitmap format, to a resource block arrangement pattern, in which a resource block group grouping a plurality of resource blocks, each of which is a minimum unit of resource allocation, is defined, and which is configured by puncturing a predetermined number of resource block groups, from a whole system band, in a predetermined pattern; and
arrange arrangement pattern identification bits that identify a resource block arrangement pattern used to assign the resource allocation information, in a predetermined position in the downlink assignment information; and
the uplink control information generation section is configured to:
form the uplink assignment information in the same bit size as the downlink assignment information;
arrange resource allocation information related to a plurality of frequency bands assigned to the uplink data channel, in the uplink assignment information, in the bitmap format; and
include in the uplink assignment information, one of the arrangement pattern identification bits that specify the resource block arrangement pattern, as an identification bit to represent the uplink assignment information.

2. The radio communication control apparatus as defined in claim 1, wherein, when clustered DFT-spread OFDM is applied as an uplink radio access scheme and a plurality of clusters are assigned to one user as the plurality of frequency bands, the uplink control information generation section is configured to arrange resource allocation information for each cluster in the uplink assignment information in the bitmap format.

3. The radio communication control apparatus as defined in claim 2, wherein, when SC-FDMA is applied as the uplink radio access scheme and a single carrier is assigned to an uplink, the uplink control information generation section is configured to arrange a starting resource block of the single carrier and a length of the single carrier in a predetermined position in the uplink assignment information as resource allocation information.

4. A radio communication control apparatus comprising:
a downlink control information generation section configured to generate downlink assignment information including control information for demodulation of a downlink data channel;
an uplink control information generation section configured to generate uplink assignment information including control information for demodulation of an uplink data channel;
a control channel multiplexing section configured to multiplex the uplink assignment information and the downlink assignment information over a control channel; and
a transmission section configured to transmit by radio the uplink assignment information and the downlink assignment information multiplexed over the control channel,
wherein the uplink control information generation section is configured to:
when a single carrier is assigned to the uplink data channel, generate first uplink assignment information, in which resource allocation information is formed with a starting resource block of the single carrier and a length of the single carrier; and
when a plurality of frequency bands are assigned to the uplink data channel, generate second uplink assignment information, in which resource allocation information related to a radio resource assigned to each frequency band is assigned in a bitmap format;
to define a resource block group grouping a plurality of resource blocks, each of which is a minimum unit of resource allocation, and to cover a whole system band by a plurality of resource block arrangement patterns, each of the resource block arrangement patterns is configured by puncturing a predetermined number of resource block groups, from the system band, in a predetermined pattern, and the resource allocation information is assigned, in the bitmap format, using one of the resource block arrangement patterns, in the second uplink assignment information; and
to make the second uplink assignment information and the first uplink assignment information the same bit size, in the resource block arrangement patterns, the number of resource blocks per resource block group and the number of resource block groups per resource block arrangement pattern are set.

5. The radio communication control apparatus as defined in claim 4, wherein the uplink control information generation section is configured to:
when a plurality of frequency bands are assigned to the uplink data channel in a system band smaller than 10 MHz, divide the whole system band in resource block group units, and assign resource allocation information of each frequency band, in resource block group units, in the bitmap format; and
when a plurality of frequency bands are assigned to the uplink data channel in a system band bigger than 10 MHz, assign resource allocation information of each frequency band, in the bitmap format, using the resource block arrangement patterns.

6. A radio communication control apparatus comprising:
a downlink control information generation section configured to generate downlink assignment information including control information for demodulation of a downlink data channel;
an uplink control information generation section configured to generate uplink assignment information including control information for demodulation of an uplink data channel;
a control channel multiplexing section configured to multiplex the uplink assignment information and the downlink assignment information over a control channel; and
a transmission section configured to transmit by radio the uplink assignment information and the downlink assignment information multiplexed over the control channel, wherein:
the downlink control information generation section is configured to arrange resource allocation information related to a radio resource allocated to the downlink data channel, in a bitmap format, in the downlink assignment information, and arrange a link identification bit to represent a downlink, in a predetermined position in the downlink assignment information; and
the uplink control information generation section is configured to form the uplink assignment information in the same bit size as the downlink assignment information, arrange resource allocation information related to a plurality of frequency bands assigned to the uplink data channel, in the bitmap format, in the uplink assignment information, and arrange a link identification bit to represent an uplink, in a predetermined position in the uplink assignment information.

7. A radio communication control apparatus comprising:
a receiving section configured to receive a control channel, in which downlink assignment information including control information for demodulation of a downlink data channel, and uplink assignment information including control information for demodulation of an uplink data channel, are multiplexed;
a downlink data channel control information demodulation section configured to demodulate the downlink assignment information multiplexed over the received control channel;
an uplink data channel control information demodulation section configured to demodulate the uplink assignment information multiplexed over the received control channel; and
a mapping section configured to, using the uplink assignment information demodulated in the uplink data channel control information demodulation section, map a transmission signal, to a radio resource allocated to the uplink data channel, wherein:
the uplink data channel control information demodulation section is configured to:
demodulate control information including downlink assignment information or uplink assignment information formed in the same bit size, by performing blind decoding of the received control channel;
in the uplink assignment information, resource allocation information related to a plurality of frequency bands assigned to the uplink data channel being arranged in a bitmap format, the resource allocation information being assigned, in the bitmap format, to a resource block arrangement pattern, in which a resource block group grouping a plurality of resource blocks, each of which is a minimum unit of resource allocation, is defined, and which is configured by puncturing a predetermined number of resource block groups, from a whole system band, in a predetermined pattern, and, in the uplink assignment information, one of the arrangement pattern identification bits that specify the resource block arrangement pattern being arranged, as an identification bit to represent the uplink assignment information; and
if the arrangement pattern identification bit arranged in the demodulated control information represents uplink assignment information, interpret the demodulated control information as uplink assignment information, extract the resource allocation information of the bitmap format, and output the extracted resource allocation information to the mapping section.

8. A radio communication control apparatus comprising:
a receiving section configured to receive a control channel, in which downlink assignment information including control information for demodulation of a downlink data channel, and uplink assignment information including control information for demodulation of an uplink data channel, are multiplexed;
a downlink data channel control information demodulation section configured to demodulate the downlink assignment information multiplexed over the received control channel;
an uplink data channel control information demodulation section configured to demodulate the uplink assignment information multiplexed over the received control channel; and
a mapping section configured to, using the uplink assignment information demodulated in the uplink data channel control information demodulation section, map a transmission signal, to a radio resource allocated to the uplink data channel, wherein:
the uplink data channel control information demodulation section is configured to demodulate control information including first uplink assignment information or second uplink assignment information formed in the same bit size, by performing blind decoding of the received control channel;
the first uplink assignment information is sent when a single carrier is assigned to the uplink data channel, and includes resource allocation information which is formed with a starting resource block of the single carrier and a length of the single carrier;
the second uplink assignment information is sent when a plurality of frequency bands are assigned to the uplink data channel, and includes resource allocation information in which a radio resource allocated to each frequency band is represented in the bitmap format;
to define a resource block group grouping a plurality of resource blocks, each of which is a minimum unit of resource allocation, and to cover a whole system band by a plurality of resource block arrangement patterns, the resource block arrangement patterns are configured by puncturing a predetermined number of resource block groups, from the system band, in a predetermined pattern, and the resource allocation information is assigned, in the bitmap format, using one of the resource block arrangement patterns, in the second uplink assignment information; and
to make the second uplink assignment information and the first uplink assignment information the same bit size, in the resource block arrangement patterns, the number of resource blocks per resource block group and the number of resource block groups per resource block arrangement pattern are set.

9. A radio communication control apparatus comprising:
a receiving section configured to receive a control channel, in which downlink assignment information including control information for demodulation of a downlink data channel, and uplink assignment information including control information for demodulation of an uplink data channel, are multiplexed;
a downlink data channel control information demodulation section configured to demodulate the downlink assignment information multiplexed over the received control channel;
an uplink data channel control information demodulation section configured to demodulate the uplink assignment information multiplexed over the received control channel; and
a mapping section configured to, using the uplink assignment information demodulated in the uplink data channel control information demodulation section, map a transmission signal to a radio resource allocated to the uplink data channel, wherein:
the uplink data channel control information demodulation section is configured to:
demodulate control information including the downlink assignment information or uplink assignment information formed in the same bit size, by performing blind decoding of the received control channel;
in the uplink assignment information, resource allocation information related to a plurality of frequency bands assigned to the uplink data channel being arranged in a bitmap format, and a link identification bit to represent an uplink being arranged in a predetermined position; and
if the link identification bit arranged in the demodulated control information represents the uplink, interpret in the demodulated control information as uplink assignment information, extract the resource allocation information of the bitmap format, and output the extracted resource allocation information to the mapping section.

10. A radio communication control method comprising the steps of:
generating downlink assignment information including control information for demodulation of a downlink data channel;
generating uplink assignment information including control information for demodulation of an uplink data channel;
multiplexing the uplink assignment information and the downlink assignment information over a control channel; and
transmitting by radio the uplink assignment information and the downlink assignment information multiplexed over the control channel, wherein:
the step of generating the downlink assignment information comprises:
arranging resource allocation information related to radio resources allocated to the downlink data channel, in the downlink assignment information, in a bitmap format;
assigning the resource allocation information, in the bitmap format, to a resource block arrangement pattern, in which a resource block group grouping a plurality of resource blocks, each of which is a minimum unit of resource allocation, is defined, and which is configured by puncturing a predetermined number of resource block groups, from a whole system band, in a predetermined pattern; and
arranging arrangement pattern identification bits that identify a resource block arrangement pattern used to assign the resource allocation information, in a predetermined position in the downlink assignment information; and
the step of generating the uplink control information comprises:
forming the uplink assignment information in the same bit size as the downlink assignment information;
arranging resource allocation information related to a plurality of frequency bands assigned to the uplink data channel, in the uplink assignment information, in the bitmap format; and
including in the uplink assignment information, one of the arrangement pattern identification bits that specify the resource block arrangement pattern, as an identification bit to represent the uplink assignment information.

11. A radio communication control method comprising the steps of:
generating downlink assignment information including control information for demodulation of a downlink data channel;
generating uplink assignment information including control information for demodulation of an uplink data channel;
multiplexing the uplink assignment information and the downlink assignment information over a control channel; and
transmitting by radio the uplink assignment information and the downlink assignment information multiplexed over the control channel, wherein:
the step of generating the uplink assignment information comprises:
when a single carrier is assigned to the uplink data channel, generating first uplink assignment information, in which resource allocation information is formed with a starting resource block of the single carrier and the length of the single carrier; and
when a plurality of frequency bands are assigned to the uplink data channel, generating second uplink assignment information, in which resource allocation information related to a radio resource assigned to each frequency band is assigned in a bitmap format;
to define a resource block group grouping a plurality of resource blocks, each of which is a minimum unit of resource allocation, and to cover a whole system band by a plurality of resource block arrangement patterns, the resource block arrangement patterns are configured by puncturing a predetermined number of resource block groups, from the system band, in a predetermined pattern, and the resource allocation information is assigned, in the bitmap format, using one of the resource block arrangement patterns, in the second uplink assignment information; and
to make the second uplink assignment information and the first uplink assignment information the same bit size, in the resource block arrangement patterns, the number of resource blocks per resource block group and the number of resource block groups per resource block arrangement pattern are set.

12. A radio communication control method comprising the steps of:
generating downlink assignment information including control information for demodulation of a downlink data channel;
generating uplink assignment information including control information for demodulation of an uplink data channel;
multiplexing the uplink assignment information and the downlink assignment information over a control channel; and
transmitting by radio the uplink assignment information and the downlink assignment information multiplexed over the control channel, wherein:
the step of generating the downlink assignment information comprises:
arranging resource allocation information related to a radio resource allocated to the downlink data channel, in a bitmap format, in the downlink assignment information; and
arranging a link identification bit to represent a downlink, in a predetermined position in the downlink assignment information; and the step of generating the uplink assignment information comprises:
forming the uplink assignment information in the same bit size as the downlink assignment information;
arranging resource allocation information related to a plurality of frequency bands assigned to the uplink data channel, in the bitmap format, in the uplink assignment information; and
arranging a link identification bit to represent an uplink, in a predetermined position in the uplink assignment information.
